# EUROPEAN PATENT APPLICATION

(11) **EP 3 979 138 A1**
(43) Date of publication of application: **06.04.2022**
(21) Application number: 20275155.8
(22) Date of filing: 30.09.2020
(51) Int. Cl.: G06N 3/04, G06N 3/08, G06F 21/62

(54) **METHOD FOR DATA ANONYMIZATION IN A SYSTEM, AND SYSTEM**

(71) Applicant: Deutsche Telekom AG, 53113 Bonn (DE)
(72) Inventor: WALKER, Nicholas, Middlesex, TW1 4JX (GB); BEARD, Timothy Giles, Cambridge, CB4 3HJ (GB)
(74) Representative: Vossius & Partner Patentanwälte Rechtsanwälte mbB

(57) **Abstract**

A computer-implemented method for data anonymization in a system, wherein the system comprises datasets, an identifier network, a Generative Adversarial Networks, GAN, generator network, an encoder network and an anonymization algorithm, the method comprising the steps of: collecting by the identifier network, an original dataset; training the identifier network, by extracting, from the original dataset, examples of any features which alone or in combination can result in a near unique or complete unique identification of a person, and generating, as a result of the training, an identification score, wherein the identification score indicates the uniqueness of an identification with a probability that an identification of a person can be achieved, wherein the identification score is a value within the range [0, 1] wherein: if the identification score is 0, it means that the extracted personal identification information is not unique, and if the identification score is 1, it means that the extracted personal identification information is unique; training the GAN generator network with a GAN training regime and the identifier network; training the encoder network, using a supervised training, by taking, as an input, an output of the generator and generating, as an output, the input of the GAN generator network; generating, by the anonymization algorithm, an anonymized dataset based on the original dataset by: encoding, by the encoder network, each data element to a vector latent space, and converting, by the GAN generator network, the latent space vector into a synthetic data example; and checking, by the anonymization algorithm, whether the final data is correctly anonymized, wherein the checking comprises: evaluating the final data using the identifier network, and rejecting any entries where the identification score, which is outputted after the evaluation of the final data, is 1 or approximately 1.

## Description

### Field of the invention

This invention relates to a method for data anonymization in a system, and system.

### Background

Organizations collect large quantities of real-world data and increasingly wish to use this data in the development of a range of machine learning based applications. However, there are legal and ethical constraints which requires the data to be anonymized.

For example, training high quality Machine Learning (ML) neural networks often requires very significant amount of data, and generating and curating this data can be costly.

Another learning approach are the Generative Adversarial Networks (GAN) which take 'noise' vectors as input and train a generator network to produce examples of the target data starting with this noise vector. Training is driven by a discriminator network which seeks to determine if the 'fake' data from the generator is different to the real target data. During training, the generator gets better at producing 'fake' data which is indistinguishable from the real data and the discriminator gets better at discerning the differences.

GAN outputs can be used to augment data sets or to 'distil' a data set into a network, which can regenerate many data examples.

Sandfort, V., Yan, K., Pickhardt, P.J. et al. Data augmentation using generative adversarial networks (CycleGAN) to improve generalizability in computed tomographic (CT) segmentation tasks. Sci Rep 9, 16884 (2019). https://doi.org/10.1038/s41598-019-52737-x, relates to labeled medical imaging data, which is scarce and expensive to generate. This article discloses that generalizable deep learning models need large amounts of data. Standard data augmentation is a method to increase generalizability and is routinely performed. Generative adversarial networks offer a method for data augmentation. This article evaluates the use of CycleGAN for data augmentation in CT segmentation tasks, by using a large image database and training a CycleGAN to transform contrast CT images into non-contrast images.

C. Joshi, I. Kaloskampis, L. Nolan et al. Generative adversarial networks (GANs) for synthetic dataset generation with binary classes, https://datasciencecampus.ons.gov.uk/projects/generative-adversarial-networks-gans-for-synthetic-dataset-generation-with-binary-classes/, relates to synthetic data generation methods to produce substitute data closely resembling real data in data-limited situations, minimizing the need for accessing real data to make informed decisions. Specifically, it relates to the use of generative adversarial networks (GANs), which are a type of neural network that generates new data from scratch. GANs feed on random noise as input, and as the training progresses it can produce realistic (synthetic) copies of the real data. GANs have been found to discover structure in the data that they have been trained on, which is remarkable if the underlying data structure or pattern is not evident and/or difficult to pull it out with other techniques.

The space of the 'noise' vectors is the latent space (the internal vectors with a specific dimension with which the data examples are internally represented) of the data generated by the generator. Encoders can be trained to transform examples of actual input data into this GAN latent space. A. Creswell, A.A. Bharath et al. "Inverting the generator of a generative adversarial network", 15 February 2018, https://arxiv.org/pdf/1802.05701.pdf, relates to encoders that can be trained to transform examples of actual input data into this GAN latent space.

It is possible to constrain the data generated by a GAN to have specific additional properties (as well as matching the target data properties) since GAN networks can be trained with multi-objective training using more than one discriminator. I. Albuquerque, J. Monteiro et al. "Multi-objective training of generative adversarial networks with multiple discriminators", 24 January 2019, https://arxiv.org/pdf/1901.08680.pdf, relates to GAN networks with multi-objective training using more than one discriminator.

The GAN latent spaces themselves can also be trained to be divided into parts which represent different aspects of the data and, therefore, data can be generated from controlled use of these parts. C. Donahue, Z. C. Lipton, A. Balsubramani, J. McAuley et el. "Semantically decomposing the latent spaces of generative adversarial networks", published as conference paper at ICLR 2018 relates to semantically decomposing latent spaces of generative adversarial networks. A specific latent space component can then be reserved for the personal identity associated with the data example and this can be assigned a random value during reconstruction.

In this connection, even if data is released as 'anonymized', it may, in fact, have enough information to identify people uniquely. For example, there may only be one person in the USA who is age 52, lives in ZIP code N, has 3 cars and 4 children. The ability to uniquely identify a person can be quantified and used to determine how 'anonymous' specific data is. In this regard, Rocher, L., Hendrickx, J.M. & de Montjoye, Y. Estimating the success of re-identifications in incomplete datasets using generative models. Nat Commun 10, 3069 (2019). https://doi.org/10.1038/s41467-019-10933-3 relates to the estimating success of re-identifications in incomplete datasets using generative models.

A Generative Adversarial Network (GAN) can be trained in a competitive manner. In a 'standard GAN training regime' the Generator (which produces the synthetic data examples) and the Discriminator (which tries to distinguish between real and synthetic examples) are trained in a competition process - the Generator improves in the quality of examples and the Discriminator improves in its ability to distinguish.

The GAN consists of two networks - a generator, which, when given, as input, a noise vector, generates an output which resembles a data example, and a discriminator, which when given a real data example outputs 1.0 and when given an example from the generator ('fake example) outputs 0.0. Both networks initially start with random behaviour.

The discriminator can be simply trained using a supervised approach, since the GAN knows which examples are real and which are 'fake'. The generator is trained by inverting the discriminator loss gradients on its input 'fake' examples and sending these loss gradients back into the generator using back-propagation.

When training a neural network using back-propagation a loss on its output is calculated. The gradient of this function is then calculated backwards throughout the network using the process of back-propagation (finding the gradients at the outputs, then working back through the network calculating the gradients going back to the input). These gradients are normally used to update the parameters (weights) of the network to try to make it get a result which minimises the loss.

When the discriminator is trained, the discriminator is given real inputs and the loss for these, as the difference of its output with the value 1.0, is found. 'Fake' inputs are given to the discriminator (generated by the Generator) and the loss for these, as the difference between its output with the value 0.0, is found.

These differences are sent back through the discriminator (as gradients of the loss) and the calculated gradients are used to update its parameters. In this part of the training (training the discriminator) the gradients are not passed back into the Generator (through the 'fake' data vector it has output). Following the parameter update the discriminator gets better at identifying real data from fake data.

This process forces the generator to try to modify its output to 'fool' the discriminator, that is generate examples on which the discriminator thinks are real, that is outputs a value near to 1.0. Over the course of the training, the generator learns to generate increasingly realistic examples and the discriminator learns to better tell the difference between these improving 'fakes' and the real examples. Good GAN training allows this process to proceed without instability or 'mode collapse' (where the generator outputs a single, or very few, near identical examples).

Additional networks can be used along with the discriminator to drive the training of the generator, and in this case the generator is trained to 'fool' the set of networks.

### Technical problem

An object of the present invention is to train the generator to both produce examples which cannot be discriminated from real examples (Discriminator Network) and which cannot be used to identify the entity associated with the generated example (Identification Network).

An object of the present invention is to address the above-mentioned technical problem where data is transferred from, for example, a service provider that is collecting real-world data, to a central repository, e.g. for training ML systems, or the data is to be kept for some length of time, wherein the data is not adequately anonymized.

Therefore, an object of the invention is to adequately anonymize the data, but in a way which minimally affects its statistics for any further training process, so that it can still be effectively used in machine learning.

Another object of the invention is to provide an automatic anonymization process, while enabling the rapid, cost-effective and successful use of real-world data, but which enables this 'cleaned' data to respect legal and practical constraints.

### Summary of the invention

The above object is achieved by the features of the independent claim.

According to an aspect of the invention, the invention provides a computer-implemented method for data anonymization in a system, wherein the system comprises datasets, an identifier network, a Generative Adversarial Networks, GAN, generator network, an encoder network and an anonymization algorithm, the method comprising the steps of: collecting, by the identifier network, an original dataset; training the identifier network, by extracting, from the original dataset, examples of any features which alone or in combination can result in a near unique or complete unique identification of a person, and generating, as a result of the training, an identification score, wherein the identification score indicates the uniqueness of an identification with a probability that an identification of a person can be achieved, wherein the identification score is a value within the range [0, 1] wherein: if the identification score is 0, it means that the extracted personal identification information is not unique, and if the identification score is 1, it means that the extracted personal identification information is unique; training the GAN generator network with a GAN training regime and the identifier network; training the encoder network, using a supervised training, by taking, as an input, an output of the generator and generating, as an output, the input of the GAN generator network; generating, by the anonymization algorithm, an anonymized dataset based on the original dataset by: encoding, by the encoder network, each data element to a vector latent space, and converting, by the GAN generator network, the latent space vector into a synthetic data example; and checking, by the anonymization algorithm, whether the final data is correctly anonymized, wherein the checking comprises: evaluating the final data using the identifier network, and rejecting any entries where the identification score, which is outputted after the evaluation of the final data, is 1 or approximately 1.

According to a preferred aspect, the GAN training regime comprises: generating, by the GAN generator network, when given, as input, a noise vector, an output resembling a data example, and a discriminator, which when given, as an input, a real data example outputs a value of 1.0 and when given, as an input, a fake example from the GAN generator network, outputs 0.0; inverting the discriminator loss gradients on its input fake examples and sending these loss gradients back into the generator using back-propagation.

According to a preferred aspect, the original dataset comprises: real-world details of service records, data usage, purchases and/or contracts of customers.

According to a preferred aspect, a unique identification is: a personal name, a location, an address, and/or a phone number.

According to a preferred aspect, the identifier network uses information from a target population database for determining the uniqueness, of a person's identification of a combined set of features.

According to another aspect of the invention, the invention provides a system for data anonymization, wherein the system comprises datasets, an identifier network, a Generative Adversarial Networks, GAN, generator network, an encoder network and an anonymization algorithm, wherein: the identifier network is configured to collect an original dataset; the identifier network is configured to train itself, by being configured to: extract, from the original dataset, examples of any features which alone or in combination can result in a near unique or complete unique identification of a person, and generate, as a result of the training, an identification score, wherein the identification score indicates the uniqueness of an identification with a probability that an identification of a person can be achieved, wherein the identification score is a value within the range [0, 1] wherein: if the identification score is 0, it means that the extracted personal identification information is not unique, and if the identification score is 1, it means that the extracted personal identification information is unique; the GAN generator network is configured to train itself with a GAN training regime and the identifier network; the encoder network is configured to train itself using a supervised training, by being configured to take, as an input, an output of the generator and to generate, as an output, the input of the GAN generator network; the anonymization algorithm is configured to generate an anonymized dataset based on the original dataset, wherein: the encoder network is configured to encode each data element to a vector latent space, and the GAN generator network is configured to convert the latent space vector into a synthetic data example; and the anonymization algorithm is configured to check whether the final data is correctly anonymized, wherein the check comprises: evaluate the final data using the identifier network, and reject any entries where the identification score, which is outputted after the evaluation of the final data, is 1 or approximately 1.

According to a preferred aspect, during the GAN training regime, the GAN generator network is configured to: generate, when given, as input, a noise vector, an output resembling a data example, and a discriminator, which when given, as an input, a real data example outputs a value of 1.0 and when given, as an input, a fake example from the GAN generator network, outputs 0.0; invert the discriminator loss gradients on its input fake examples; and send these loss gradients back into the generator using back-propagation.

According to a preferred aspect, the original dataset comprises real-world details of service records, data usage, purchases and/or contracts of customers.

According to a preferred aspect, a unique identification is a personal name, a location, an address, and/or a phone number.

According to a preferred aspect, the identifier network uses information from a target population database for determining the uniqueness of a person's identification, of a combined set of features.

Other aspects, features, and advantages will be apparent from the summary above, as well as from the description that follows, including the figures and the claims.

### Brief description of the drawings

In the drawings:
- FIG. 1: illustrates a summary of the system of the present invention.
- FIG. 2: illustrates a flow chart according to a method of the present invention.

### Detailed description of the invention

In an embodiment, the invention provides a data anonymization system and method for taking real-world data, which has the potential to reveal specific details of individuals, and using this data to generate a synthetic dataset with the statistical properties of the original data but unable to allow personal identification from that data. This synthetic dataset can therefore be used in e.g. machine learning, in place of the original data, but cannot be used to extract specific personal details.

An anonymization Generative Adversarial Network (GAN) is trained using two 'discriminators' to generate anonymized synthetic data points matching a data distribution of the original data collection. An additional Encoding network is trained to encode each actual data item into the GAN latent space. The final data set is generated by encoding, using the encoder network 13, each of the original data elements and generating the synthetic, but now anonymized, equivalent data point using the GAN generator from this encoded vector. This is because the Generator can only generate data which scores low on the identifier network 11, yet the nature of the data distribution on other respects remains the same, since it scores high on the Discriminator network, i.e. it is indistinguishable from real data by the network.

The discriminator networks are:
1) The usual GAN discriminator network which outputs a value between 0 and 1 depending on how correct it is in determining if the GAN output is a real data point or not; and
2) An identifier network 11 which seeks to correctly extract the identifying values from the GAN data output and generates a number between 0 and 1 indicating how successful it is in extracting this data.

Specific elements of data can be extracted by a trained network, even from unstructured data, thereby enabling extraction e.g. of the personal identity value from a data entry (for example represented to it as fields such as names and addresses). The identifier network 11 is trained using this approach on the original data to extract from it distinguishable elements which can be used to identify a person, such a name, age, address and any other specific identifying features. The specificity of features are then integrated to generate an 'identification score' between 0 (no identification extracted) and 1 (full identification extracted).

The GAN is trained by the two discriminators to generate data examples which are both indistinguishable from data in the collection and yet which cannot be processed to extract the identifier information.

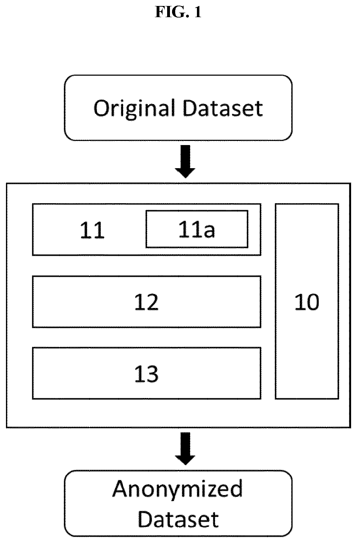

FIG. 1 illustrates a summary of the system of the present invention. In FIG. 1, the system for anonymizing data comprises datasets (an original dataset and an anonymized dataset), an identifier network 11, a GAN generator network 12, an encoder network 13 and an anonymization algorithm 10. The identifier network 11 may use information from a target population database 11a, to determine the uniqueness of a combined set of features.

The datasets comprise: an original dataset, which may include information which allows determination of a person's identity; and an anonymized dataset generated by processing the original dataset through the anonymization algorithm 10.

The identifier network 11 is capable of extracting personal identification features from the original data elements, and synthesizing them into a score between 0 (no identification - completely non-unique) and 1 (full identification - completely unique). The identifier network 11 may use information from a target population database 11a, to determine the uniqueness of a combined set of features.

The GAN generator network 12 is trained using a GAN training process which includes the identifier network 11 as an additional discriminator (with output inverted), capable of generating synthetic data examples matching the distribution of the original data from a vector latent space, these example having low (high) scores from the identifier network 11.

The encoder network 13, capable of taking data examples from the original dataset and encoding them into the corresponding latent space vector of the GAN generator network 12.

According to an embodiment of the invention, there is provided a method for data anonymization in a system, wherein the system comprises datasets, an identifier network 11, a GAN generator network 12, an encoder network 13 and an anonymization algorithm 10.

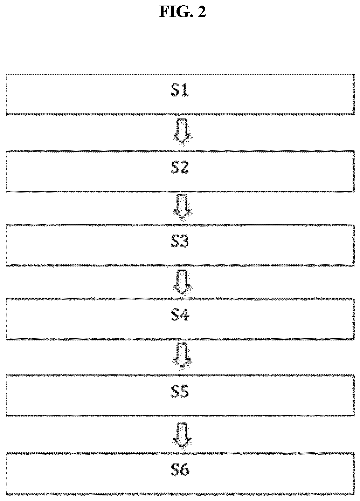

FIG. 2 illustrates a flow chart according to the method of the present invention. In FIG. 2, the method comprises the following steps.

In step S1, the identifier network 11 collects an original dataset. The dataset may comprise, for example, real-world details of the service records, data usage, purchases or contracts of customers, etc.

In step S2, the identifier network 11 is developed and trained by extracting, from the original dataset, examples of any features which alone or in combination can result in a (near or complete) unique identification, such as personal name, location, address, phone number, IDs of various types etc. As a result of this training, a score for indicating the uniqueness of identification is generated, which will be referred to as an identification score. The identification score may be any number between 0 (no identification - completely non-unique) and 1 (full identification - completely unique), representing the probability that an identification can be achieved - e.g. an identification score of 0.5 would mean that there is a 50% chance of using that data to uniquely identify a person.

Preferably, the identifier network 11 could, for example, use any suitable analysis and metrics to determine, for each data entry, how unique that individual is in a target population, for which the target population database 11a is used. For example, it could use the analysis and metrics by the above mentioned paper of Rocher, L., Hendrickx, J.M. & de Montjoye, Y. Estimating the success of re-identifications in incomplete datasets using generative models. Nat Commun 10, 3069 (2019). https://doi.org/10.1038/s41467-019-10933-3. An example of how this analysis works is as follows: if a surname and region are given, the uniqueness will depend on how many individuals with that surname live in that region. Individuals with no car or 3 cars are more easily identified from this specific feature than individuals with 2 cars and so forth since the majority of people (in a specific target population) own 2 cars.

In step S3, the GAN generator network 12 is trained by using the identifier network 11 as an additional discriminator (additional to the usual Real/Fake Discriminator) and a standard GAN training regime.

The GAN training regime may involve the steps of generating, by the GAN generator network, when given, as input, a noise vector, an output resembling a data example, and a discriminator, which when given, as an input, a real data example outputs a value of 1.0 and when given, as an input, a fake example from the GAN generator network, outputs 0.0. Lastly, the discriminator inverts the loss gradients on its input fake examples and sends these gradients back into the generator using back-propagation.

In the above-mentioned GAN training regime, only the loss of fake data is send back through the discriminator. For example, the 'inverse' of the loss can be found for the fake examples as the difference of the discriminator output with the value 1.0 (not 0.0 as before). The back-propagation calculates the gradient back through the discriminator, and then onwards back through the fake output vectors and back through the generator (all the way back to its input of a noise vector). Then the generator parameters are updated (but not the discriminator) with these gradients. This means that the generator will change its fake examples to try to make the discriminator output a 1.0 when the discriminator sees them, that is make them resemble a real example of data.

In sum, the following two processes take place:
1. the discriminator is trained with a loss on the fake examples as the difference on the output of the discriminator to 0.0, and (only) the discriminator is updated (also real examples are given and the loss of the output as difference to value 1.0 is used)
2. the generator is trained with a loss on the output of the discriminator when given only the fake examples to 1.0, back-propagating this through the discriminator, then the generator and only updating the generator.

In step S4, the encoder network 13 is trained. The training may be performed by using a suitable method such as the one disclosed by the above mentioned paper of A. Creswell, A.A. Bharath et al. "Inverting the generator of a generative adversarial network", 15 February 2018, https://arxiv.org/pdf/1802.05701.pdf.

In step S5, the anonymization algorithm 10 generates an anonymized dataset based on the original dataset by: using the encoder network 13 to encode each data element to a vector latent space; using the GAN generator network 12 to convert the latent space vector into a synthetic data example.

Finally, in step S6, the anonymization algorithm 10 checks that the final data is correctly anonymized, wherein the checking comprises evaluating the final data using the identifier network 11 and rejecting any entries where the identification score from this is high. If the training process was successful, the number of these examples should be very small. In other words, this final step ensures that the synthetic data examples produced by the generator identification score are as low as possible, that is, preferably, as near 0 as possible.

In view of the above, it is possible to provide a generic data anonymizing process that is able to handle significant quantities of data and provide some assurance that the data has been successfully anonymized, thereby allowing that data to be stored for extended periods, shared between organizations and so forth, which is important for an expanded use of data derived from real-world services.

In addition, the above described invention has the advantageous technical effects that data can be anonymized to a level which can be checked, thereby reducing the legal and ethical issues associated with its extended use, and the developed networks can be used to expand the amount of data, if this is required.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A computer-implemented method for data anonymization in a system, wherein the system comprises datasets, an identifier network, a Generative Adversarial Networks, GAN, generator network, an encoder network and an anonymization algorithm, the method comprising the steps of:
collecting (S1), by the identifier network, an original dataset;
training (S2) the identifier network, by extracting, from the original dataset, examples of any features which alone or in combination can result in a near unique or complete unique identification of a person, and generating, as a result of the training, an identification score, wherein the identification score indicates the uniqueness of an identification with a probability that an identification of a person can be achieved, wherein the identification score is a value within the range [0, 1] wherein: if the identification score is 0, it means that the extracted personal identification information is not unique, and if the identification score is 1, it means that the extracted personal identification information is unique;
training (S3) the GAN generator network with a GAN training regime and the identifier network;
training (S4) the encoder network, using a supervised training, by taking, as an input, an output of the generator and generating, as an output, the input of the GAN generator network;
generating (S5), by the anonymization algorithm, an anonymized dataset based on the original dataset by:
encoding, by the encoder network, each data element to a vector latent space, and
converting, by the GAN generator network, the latent space vector into a synthetic data example; and
checking (S6), by the anonymization algorithm, whether the final data is correctly anonymized, wherein the checking comprises:
evaluating the final data using the identifier network, and
rejecting any entries where the identification score, which is outputted after the evaluation of the final data, is 1 or approximately 1.

2. The method of claim 1, wherein the GAN training regime comprises:
generating, by the GAN generator network, when given, as input, a noise vector, an output resembling a data example, and a discriminator, which when given, as an input, a real data example outputs a value of 1.0 and when given, as an input, a fake example from the GAN generator network, outputs 0.0;
inverting the discriminator loss gradients on its input fake examples and sending these gradients back into the generator using back-propagation.

3. The method of claim 1 or 2, wherein the original dataset comprises: real-world details of service records, data usage, purchases and/or contracts of customers.

4. The method of any one of claims 1 to 3, wherein a unique identification is: a personal name, a location, an address, and/or a phone number.

5. The method of any one of claims 1 to 4, wherein the identifier network uses information from a target population database for determining the uniqueness of a person's identification, of a combined set of features.

6. A system for data anonymization, wherein the system comprises datasets, an identifier network (11), a Generative Adversarial Networks, GAN, generator network (12), an encoder network (13) and an anonymization algorithm (10), wherein:
the identifier network (11) is configured to collect an original dataset;
the identifier network (11) is configured to train itself, by being configured to:
extract, from the original dataset, examples of any features which alone or in combination can result in a near unique or complete unique identification of a person, and
generate, as a result of the training, an identification score, wherein the identification score indicates the uniqueness of an identification with a probability that an identification of a person can be achieved, wherein the identification score is a value within the range [0, 1] wherein: if the identification score is 0, it means that the extracted personal identification information is not unique, and if the identification score is 1, it means that the extracted personal identification information is unique;
the GAN generator network (12) is configured to train itself with a GAN training regime and the identifier network,;
the encoder network (13) is configured to train itself using a supervised training, by being configured to take, as an input, an output of the generator and to generate, as an output, the input of the GAN generator network;
the anonymization algorithm (10) is configured to generate an anonymized dataset based on the original dataset, wherein:
the encoder network is configured to encode each data element to a vector latent space, and
the GAN generator network is configured to convert the latent space vector into a synthetic data example; and
the anonymization algorithm (10) is configured to check whether the final data is correctly anonymized, wherein the check comprises: evaluate the final data using the identifier network, and reject any entries where the identification score, which is outputted after the evaluation of the final data, is 1 or approximately 1.

7. The system of claim 6, wherein, during the GAN training regime, the GAN generator network is configured to:
generate, when given, as input, a noise vector, an output resembling a data example, and a discriminator, which when given, as an input, a real data example outputs a value of 1.0 and when given, as an input, a fake example from the GAN generator network, outputs 0.0;
invert the discriminator loss gradients on its input fake examples; and
send these gradients back into the generator using back-propagation.

8. The system of claim 6 or 7, wherein the original dataset comprises: real-world details of service records, data usage, purchases and/or contracts of customers.

9. The system of any one of claims 6 to 8, wherein a unique identification is: a personal name, a location, an address, and/or a phone number.

10. The method of any one of claims 6 to 9, wherein the identifier network (11) uses information from a target population database (11a) for determining the uniqueness of a person's identification, of a combined set of features.

## Amended claims

### Amended claims in accordance with Rule 137(2) EPC.

1. A computer-implemented method for data anonymization in a system, wherein the system comprises: datasets, an identifier network, Generative Adversarial Networks GAN, comprising a generator network and a discriminator network; an encoder network and an anonymization algorithm, the method comprising the steps of:
collecting (S1), by the identifier network, an original dataset;
training (S2) the identifier network, by extracting, from the original dataset, examples of any features which alone or in combination can result in a near unique or complete unique personal identification information of a person, and generating, as a result of the training, an identification score, wherein the identification score indicates the uniqueness of an identification with a probability that an identification of a person can be achieved, wherein the identification score is a value within the range [0, 1] wherein: if the identification score is 0, it means that the extracted personal identification information is not unique, and if the identification score is 1, it means that the extracted personal identification information is unique;
training (S3) the GAN generator network with a GAN training regime which includes the GAN discriminator network and the identifier network;
training (S4) the encoder network, using a supervised training, by taking, as an input, an output of the GAN generator network and generating, as an output, the input of the GAN generator network;
generating (S5), by the anonymization algorithm, an anonymized dataset based on the original dataset by:
encoding, by the encoder network, each data element to a vector latent space, and
converting, by the GAN generator network, the latent space vector into a synthetic data example; and
checking (S6), by the anonymization algorithm, whether the anonymized dataset is correctly anonymized, wherein the checking comprises:
evaluating the anonymized dataset using the identifier network, and
rejecting any entries where the identification score, which is outputted after the evaluation of the anonymized dataset, is 1 or approximately 1.

2. The method of claim 1, wherein the GAN training regime comprises:
generating, by the GAN generator network, when given, as input a noise vector, an output resembling a data example, and
outputting, by the GAN discriminator network, when given as an input a real data example, a value of 1.0 and;
outputting, by the GAN discriminator network, when given as an input a fake example from the GAN generator network, a value of 0.0;
inverting the discriminator loss gradients on its input fake examples and sending these gradients back into the GAN generator network using back-propagation in order to train the GAN generator network.

3. The method of claim 1 or 2, wherein the original dataset comprises: real-world details of service records, data usage, purchases and/or contracts of customers.

4. The method of any one of claims 1 to 3, wherein a unique identification is: a personal name, a location, an address, and/or a phone number.

5. The method of any one of claims 1 to 4, wherein the identifier network uses information from a target population database for determining the uniqueness of a person's identification, deducible from a combined set of features.

6. A system for data anonymization, wherein the system comprises datasets, an identifier network (11), Generative Adversarial Networks, GAN, comprising a generator network and a discriminator network (12), an encoder network (13) and an anonymization algorithm (10), wherein:
the identifier network (11) is configured to collect an original dataset;
the identifier network (11) is configured to train itself, by being configured to:
extract, from the original dataset, examples of any features which alone or in combination can result in a near unique or complete unique personal identification information of a person, and
generate, as a result of the training, an identification score, wherein the identification score indicates the uniqueness of an identification with a probability that an identification of a person can be achieved, wherein the identification score is a value within the range [0, 1] wherein: if the identification score is 0, it means that the extracted personal identification information is not unique, and if the identification score is 1, it means that the extracted personal identification information is unique;
the GAN generator network (12) is configured to train itself with a GAN training regime with the GAN discriminator network and the identifier network;
the encoder network (13) is configured to train itself using a supervised training, by being configured to take, as an input, an output of the GAN generator network and to generate, as an output, the input of the GAN generator network;
the anonymization algorithm (10) is configured to generate an anonymized dataset based on the original dataset, wherein:
the encoder network is configured to encode each data element to a vector latent space, and
the GAN generator network is configured to convert the latent space vector into a synthetic data example; and
the anonymization algorithm (10) is configured to check whether the anonymized dataset is correctly anonymized, wherein the check comprises: evaluate the anonymized dataset using the identifier network, and reject any entries where the identification score, which is outputted after the evaluation of the anonymized dataset, is 1 or approximately 1.

7. The system of claim 6, wherein, during the GAN training regime:
the GAN generator network is configured to generate, when given as input a noise vector, an output resembling a data example;
the GAN discriminator network is configured to, when given as an input a real data example, output a value of 1.0 and when given as an input a fake example from the GAN generator network, output a value of 0.0;
invert the discriminator loss gradients on its input fake examples; and
send these gradients back into the GAN generator network using back-propagation.

8. The system of claim 6 or 7, wherein the original dataset comprises: real-world details of service records, data usage, purchases and/or contracts of customers.

9. The system of any one of claims 6 to 8, wherein a unique identification is: a personal name, a location, an address, and/or a phone number.

10. The system of any one of claims 6 to 9, wherein the identifier network (11) uses information from a target population database (11a) for determining the uniqueness of a person's identification, of a combined set of features.
